# EUROPEAN PATENT SPECIFICATION

(11) **EP 0 878 127 B1**
(45) Date of publication and mention of the grant of the patent: **19.12.2001**
(21) Application number: 98201448.2
(22) Date of filing: 06.05.1998
(51) Int. Cl.: A01M 7/00

(54) **Spraying device**
Sprühvorrichtung
Dispositif de pulvérisation

(30) Priority: 05.05.1997 NL 1005968; 15.10.1997 NL 1007282
(43) Date of publication of application: 18.11.1998
(73) Proprietor: MACHINEFABRIEK J.M. VAN DEN MUNCKHOF B.V., NL-5961 CV Horst (NL)
(72) Inventor: van den Munckhof, Mathijs René Marie Jozef, 5961 BH Horst (NL); van den Munckhof, Peter Jozef Marie, 5961 BH Horst (NL)
(74) Representative: Eveleens Maarse, Pieter

(56) References cited:
- EP-A- 0 272 740
- DE-A- 3 316 110
- NL-A- 8 700 495
- US-A- 4 768 713
- US-A- 5 172 861

## Description

The invention relates to a device for spraying crops, comprising: at least two elongate air chambers provided with at least one outlet opening; at least one fan connected to each of elongate the air chamber for generating an overpressure in the air chambers relative to the environment; and at least one spray nozzle arranged in the vicinity of the outlet openings for atomizing liquid in the air flow leaving the outlet openings.

Such a device is known from the brochure "Munckhof Boomgaardspuitmachines" (Munckhof Orchard Spraying Devices).

In the spraying device known from this prior art use is made of a single fan which debouches in the bottom end of the air chamber. The fan is further connected in this spraying device to a wall of the air chamber, wherein the air leaving the fan is subjected to a first change of direction and must exit via the sides of the air chamber, whereby it is subjected to a second change of direction.

These two changes of direction entail a large loss of air flow. A fan of large capacity is therefore necessary. This results in a bulky and heavy fan, and therewith in a high-power motor, whereby the mass of this motor is large, while energy consumption is moreover high.

Such a device is further known from the European patent application with publication number 0 272 740.

In this known device the air which has passed through the fan is also subjected to a number of changes in direction. This is also a single fan of large capacity.

The object of the present invention is to provide such a device wherein the fan capacity can be limited considerably.

This object is achieved in that the device comprises at least two elongate air chambers which are each connected to a fan and which are each positioned on either side of a space intermediate, between both elongate chambers and in that the at least two fans are placed mutually opposite in the wall of each of the elongate air chambers directed toward the intermediate space.

As a result of these measures the air leaving the fans is hardly subjected to any further change of direction on its way to the outlet opening, so that the flow losses are low and only a smaller fan capacity is required.

It is further pointed out that by applying at least two fans per spraying device a more attractive dimensioning of the fan can be obtained; the diameter of the fans is after all smaller, so that they can be accommodated more easily in the construction.

It is pointed out here that in this configuration the fans are arranged in mutually facing walls of the air chambers. The fans thus draw in their air from the space between the walls of the air chambers. In order to prevent an underpressure occurring in this space it is important that a minimal distance is realized between these air chambers.

According to another preferred embodiment the fans placed opposite each other and associated with different air chambers are mounted in a collective bearing housing. This results in an attractive construction.

According to a preferred embodiment the air chamber and the outlet opening extend substantially in vertical direction.

This provides the option of travelling for instance through orchards or nurseries with the device chamber. With this configuration it is possible to spray two rows of crops simultaneously.

According to yet another embodiment the air chambers and the outlet openings extend substantially in horizontal direction.

Other attractive preferred embodiments are stated in the remaining sub-claims.

The present invention will be elucidated hereinbelow with reference to the annexed drawings, in which:

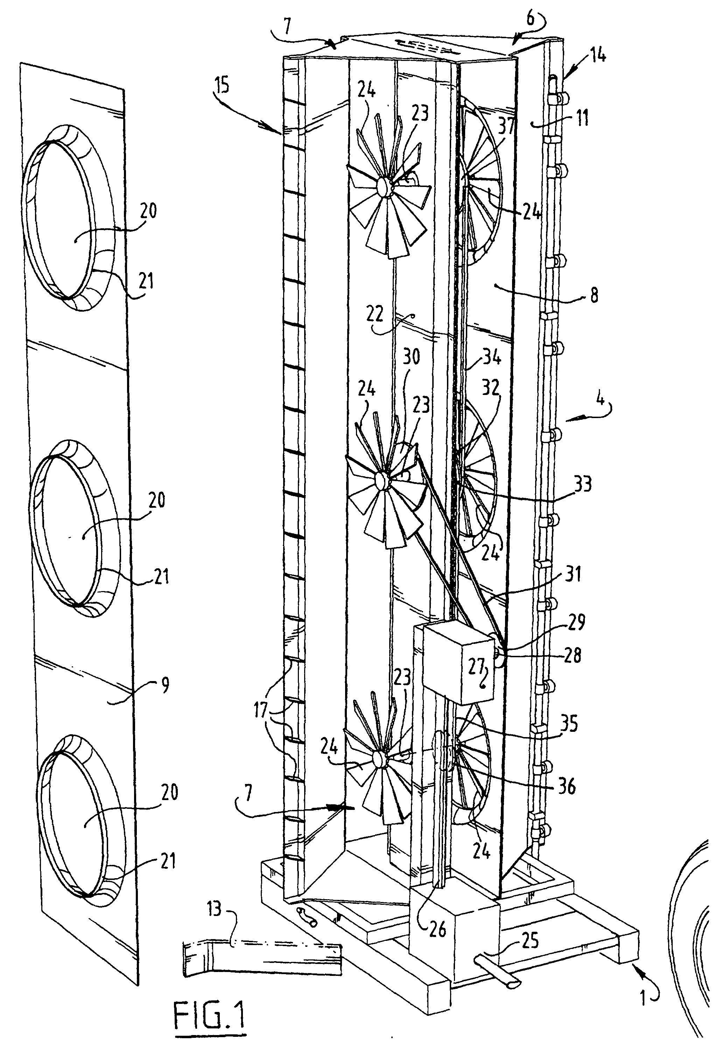

figure 1 shows a perspective exploded view of a device according to the invention;

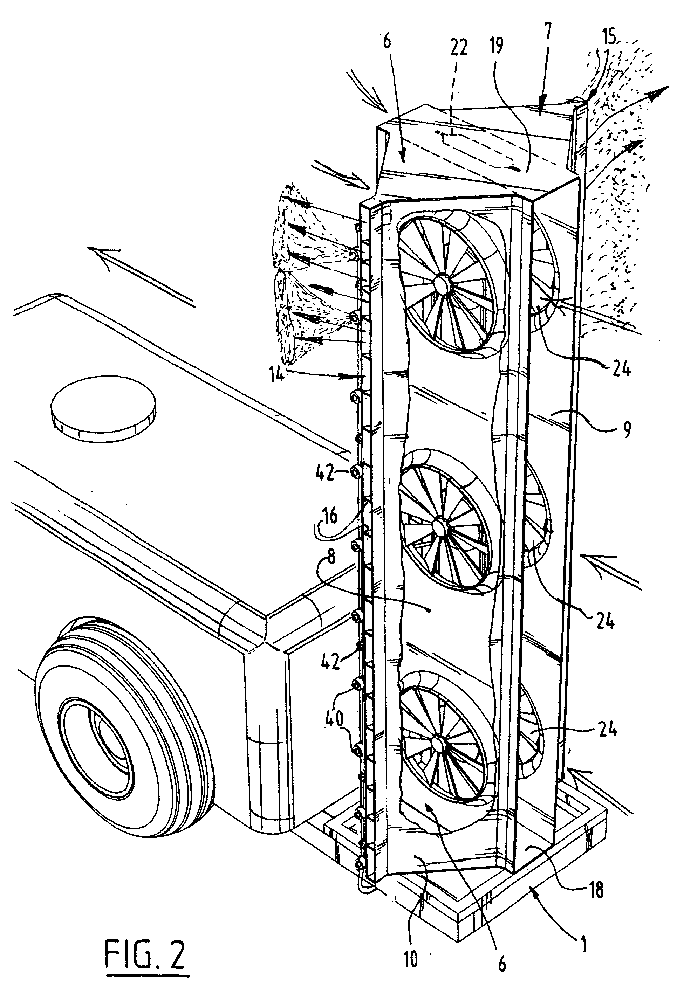

figure 2 is a partly broken away perspective view of the device shown in figure 1;
figure 3 is a perspective view from the front of the device shown in figures 1 and 2; and
figure 4 is a perspective view of an alternative embodiment of the invention.

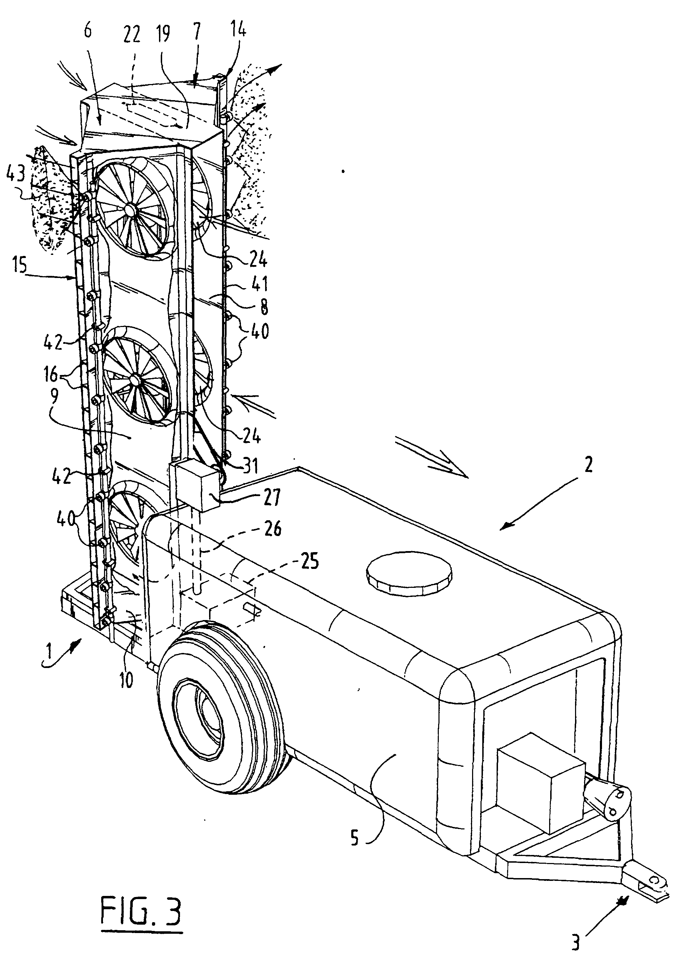

The spraying device according to the present invention is arranged on a frame 1 which forms part of a trailer 2. As shown in figure 3, this trailer 2 is provided with a shaft 3 with which it can be attached to for instance a tractor.

The actual spraying device 4 is therefore mounted on the rear part of frame 1. It is also possible to place the spraying device on the frame preceding the tank in the travel direction. A tank 5 is further fixed to frame 1. This tank 5 is used to store the liquid for atomizing.

The actual spraying device 4 is formed in the present embodiment by two air chambers 6,7. Air chambers 6,7 are elongate and formed substantially by three walls, i.e. a fan wall 8 respectively 9, and two side walls each 10 respectively 11 and 12 respectively 13.

Side walls 10,12 respectively 11,13 are herein formed such that they transpose into an outlet opening 14 respectively 15. In each of the outlet openings 14,15 are arranged baffles 16 respectively 17 which serve on the one hand as spacer and on the other hand as baffle for guiding the air flow in order to ensure that the air flow exits as far as possible in horizontal direction. These baffles are also fixed by riveting and/or spot welding. In some situations it is important for the effect of the spraying to cause the air flow to exit at an angle to the horizontal. This can be achieved by placing the baffles at a relevant angle of for instance 15° to the horizontal.

It will be apparent that each of the air chambers is provided with a collective bottom wall 18 and a collective top wall 19. The top wall in particular also has a structural function of holding together the top sides of the air chambers.

Fan walls 8,9 are each provided with three apertures 20 provided with an inward bulging edge 21.

It will be apparent that it is possible to arrange more or fewer openings for the fans; this depends on the length of the air chambers, the fan capacity and other dimensions.

Between the two fan walls 8,9 is arranged a column 22 which is formed by two plates bent substantially into a Ω-shape which are placed mirror-symmetrically opposite each other and mutually connected once again by spot welding or riveting. Other connections, such as bolts and nuts, are also possible. In the column are mounted three fan shafts 23, on each of which are placed two fans 24. Each of the fans 24 is thus situated in a fan aperture 20 in the associated fan wall 8,9.

For driving of the fans use is made of a gearbox shown by means of a block 25 and placed on the frame, which gearbox is driven by a motor not shown in the drawing and connected to a transmission 27 by means of a vertical shaft 26. Transmission 27 is provided with an output shaft 28 on which is mounted a pulley 29, while the middle fan shaft 23 is provided with a pulley 30. A belt 31 is trained around pulleys 29,30. Arranged on fan shaft 23 on the other side of column 22 are a second and a third pulley 32 respectively 33 which are connected by means of belts 34 respectively 35 to pulleys 36 respectively 37 placed on the lower respectively upper fan shaft 23. Other constructions can also be applied here, such as driving of the lower fan shaft, the use of a pulley on either side of the column or driving with a vertical shaft and right-angled gear transmissions.

The fans 24 are each driven by rotation of motor 25.

Finally, for atomizing liquid to be carried along with the air a series of spray nozzles 40 is arranged in the vicinity of each of the elongate outlet openings 14,15. These spray nozzles are each fixed to a conduit 41 which is fixed to wall 7 respectively 8 by means of saddles 42 and which is connected to a liquid pump for pumping up the liquid.

As a result of these measures the nozzles 40 atomize liquid carried up by the associated pump, wherein the thus created mist 43 is carried along by the air flow leaving the air outlet openings.

In the above embodiment each air chamber is provided with only one outlet opening; it is possible to provide each of the air chambers with more than one, for instance two or three, for instance parallel outlet openings.

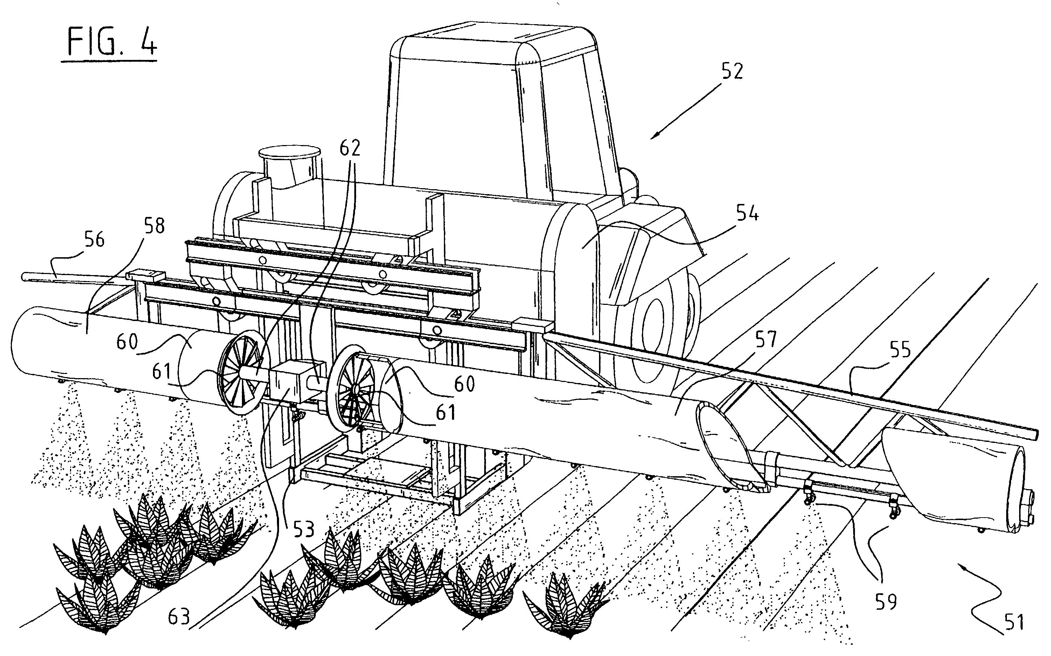

In figure 4 an alternative spraying device 51 is arranged which is mounted on a tractor 52. Spraying device 51 comprises a frame 53, which otherwise forms no part of the present invention, to which is fixed a tank 54 for liquid for spraying, and a support frame 55,56 on which are fixed two air chambers 57,58 manufactured from flexible material. Spray nozzles 59 are further arranged on support frames 55,56 with regular interspacing.

Outside the flexible part which extends over the greater part of their length the air chambers 57,58 also each comprise a ring 60 manufactured from metal. In the inward directed opening of each of the rings 60 is arranged a fan 61, each of which fans is provided with a shaft 62, which two shafts 62 are mounted in a bearing housing 63. In housing 63 is accommodated a motor, for instance an electric motor, hydromotor or a motor driven by the power take-off of the tractor.

The operation of the thus described device will now be described.

When the fans rotate they will draw air out of the space located between fans 61 and urge this into air chambers 57,58 without any change of direction. These air chambers 57,58 are provided with a downward directed outlet opening (not shown in the drawing) which extends over the whole length and is integrated into the frame, as shown in said European patent application. The air exits to the outside through this outlet opening. The liquid for atomizing is there carried from spray nozzles 59 into the air flow where it is atomized.

It will be apparent that with the device according to the present invention it is possible to cause the air to flow out of the outlet opening without a number of changes in direction, which is attractive in terms of the fan capacity. In addition, little intrusive draught is caused by the configuration, so that in the vicinity of the fans the downward exiting air flow is disturbed as little as possible.

## Claims

1. Device (4) for spraying crops, comprising:
- at least two elongate air chambers (6,7;57,58) provided with at least one outlet opening (14,15);
- at least one fan (24;61) connected to each of the elongate air chambers (6,7;57,58) for generating an overpressure in the air chamber relative to the environment;
- at least one spray nozzle (40,59) arranged in the vicinity of the outlet opening (14,15) for atomizing liquid in the air flow leaving the outlet openings,
**characterized in that**
- the device (4) comprises two elongate air chambers (6,7;57,58) which are each connected to a fan (24;61) and which are each positioned on either side of a space intermediate, between both elongate chambers (6,7;57,58) and
- the at least two fans (24;61) are placed mutually opposite in the wall (8,9) of each of the elongate air chambers (6,7:57,58) directed toward the intermediate space.

2. Device as claimed in claim 1, **characterized in that** the device (4) can travel in horizontal direction and that the elongate air chambers (6,7;57,58) are disposed symmetrically relative to the direction of movement.

3. Device (4) as claimed in claim 1 or 2, **characterized in that** the fans (24,61) placed opposite each other and associated with different elongate air chambers (6,7;57,58) are mounted in a collective bearing housing (22).

4. Device (4) as claimed in claim 3, **characterized in that** the fans (24) are drivable by a belt (31,34,35).

5. Device (4) as claimed in claim 1, 2, 3 or 4, **characterized in that** the elongate air chambers (57,58) and the outlet openings extend substantially in horizontal direction.

6. Device as claimed in claim 5, **characterized in that** the elongate air chambers (57,58) each comprise a wall manufactured at least partially from flexible material and fixed to a supporting frame.

7. Device (4) as claimed in claim 1, 2, 3 or 4, **characterized in that** the elongate air chambers (6,7) and the outlet openings (14,15) extend substantially in vertical direction.

8. Device (4) as claimed in claim 7, **characterized in that** at least one of the elongate air chambers (6,7) is connected to at least two fans (24) which are arranged substantially evenly distributed in the length direction of the wall (8,9) adjoining the intermediate space.

9. Device (4) as claimed in claim 8, **characterized in that** three fans (24) are arranged in each of the air chamber walls (8,9) and that a motor is connected by a drive belt (31) to the middle fan (24) which is connected with drive belts (34,35) to the other fans (24).

10. Device (4) as claimed in claim 9, **characterized in that** the walls (8,9) of the elongate air chambers in which the fans are arranged are connected to the outlet openings (14,5) by means of inclining walls (10-13).

## Patentansprüche

1. Vorrichtung (4) zum Besprühen von Feldfrüchten, mit:
- wenigstens zwei langgestreckten Luftkammern (6, 7; 57, 58), die mit wenigstens einer Ausgangsöffnung (14, 15) versehen sind;
- wenigstens einem Gebläse (24; 61), das mit jeder der langgestreckten Luftkammern (6, 7; 57, 58), verbunden ist, um in der Luftkammer relativ zur Umgebung einen Überdruck zu erzeugen;
- wenigstens einer Sprühdüse (40, 59), die in der Nähe der Ausgangsöffnung (14, 15) angeordnet ist, um Flüssigkeit in den die Ausgangsöffnungen verlassenden Duftstrom zu zerstäuben,
**dadurch gekennzeichnet, daß**
- die Vorrichtung (4) zwei langgestreckte Luftkammern (6, 7; 57, 58) aufweist, die jeweils mit einem Gebläse (24; 61) verbunden sind, und die jeweils auf einer Seite eines Zwischenraums zwischen den beiden langgestreckten Kammern (6, 7; 57, 58) positioniert sind, und
- die wenigstens zwei Gebläse (24; 61) in der Wand (8, 9) jeder der langgestreckten Luftkammern einander gegenüber liegend und auf den Zwischenraum gerichtet, plaziert sind.

2. Vorrichtung nach Anspruch 1, **dadurch gekennzeichnet, daß** die Vorrichtung (4) in Horizontalrichtung laufen kann und daß die langgestreckten Luftkammern (6, 7; 57, 58) relativ zur Bewegungsrichtung symmetrisch angeordnet sind.

3. Vorrichtung (4) nach Anspruch 1 oder 2, **dadurch gekennzeichnet, daß** die Gebläse (24, 61), die einander gegenüberliegend angeordnet und unterschiedlichen langgestreckten Luftkammern (6, 7; 57, 58) zugeordnet sind, in einem gemeinsamen Lagergehäuse (22) befestigt sind.

4. Vorrichtung (4) nach Anspruch 3, **dadurch gekennzeichnet, daß** die Gebläse (24) durch einen Riemen (31, 34, 35) antreibbar sind.

5. Vorrichtung (4) nach Anspruch 1, 2, 3 oder 4, **dadurch gekennzeichnet, daß** die langgestreckten Luftkammern (57, 58) und die Ausgangsöffnungen sich im wesentlichen in horizontaler Richtung erstrecken.

6. Vorrichtung nach Anspruch 5, **dadurch gekennzeichnet, daß** die langgestreckten Luftkammern (57, 58) jeweils eine Wand aufweisen, die wenigstens teilweise aus einem flexiblen Material hergestellt ist und die an einem Stützrahmen befestigt ist.

7. Vorrichtung (4) nach Anspruch 1, 2, 3 oder 4, **dadurch gekennzeichnet, daß** die langgestreckten Luftkammern (6, 7) die Ausgangsöffnungen (14, 15) sich im wesentlichen in vertikaler Richtung erstrecken.

8. Vorrichtung (4) nach Anspruch 7, **dadurch gekennzeichnet, daß** wenigstens eine der langgestreckten Luftkammern (6, 7) mit wenigstens zwei Gebläsen (24) verbunden ist, die so angeordnet sind, daß sie im wesentlichen gleichmäßig in Längsrichtung der Wand (8, 9), welche sich an den Zwischenraum anschließt, verteilt sind.

9. Vorrichtung (4) nach Anspruch 8, **dadurch gekennzeichnet, daß** drei Gebläse (24) in jeder der Luftkammern (8, 9), angeordnet sind, und daß ein Motor durch einen Antriebsriemen (31) mit dem mittleren Gebläse (24) verbunden ist, das mittels Antriebsriemen (34, 35) mit den anderen Gebläsen (24) verbunden ist.

10. Vorrichtung (4) nach Anspruch 9, **dadurch gekennzeichnet, daß** die Wände (8, 9) der langgestreckten Luftkammern, in welchen die Gebläse angeordnet sind, mittels geneigter Wände (10-13) mit den Ausgangsöffnungen (14, 5) verbunden sind.

## Revendications

1. Dispositif (4) pour pulvériser sur des récoltes, comportant :
- au moins deux chambres d'air allongées (6, 7 ; 57, 58) munies d'au moins une ouverture de sortie (14, 15),
- au moins un ventilateur (24 ; 61) relié à chacune des chambres d'air allongées (6, 7 ; 57, 58) pour créer une surpression dans la chambre d'air par rapport à l'environnement,
- au moins une buse de pulvérisation (40, 59) agencée au voisinage de l'ouverture de sortie (14, 15) pour atomiser un liquide dans l'écoulement d'air quittant les ouvertures de sortie,
**caractérisé en ce que**
- le dispositif (4) comporte deux chambres d'air allongées (6, 7 ; 57, 58) qui sont, chacune, reliées à un ventilateur (24 ; 61) et qui sont, chacune, positionnées sur l'un ou l'autre côté d'un espace intermédiaire, entre deux chambres allongées (6, 7 ; 57, 58) et
- les au moins deux ventilateurs (24 ; 61) sont positionnés de manière mutuellement opposée dans la paroi (8, 9) de chacune des chambres d'air allongées (6, 7 ; 57, 58) dirigée vers l'espace intermédiaire.

2. Dispositif selon la revendication 1, **caractérisé en ce que** le dispositif (4) peut se déplacer dans une direction horizontale et **en ce que** les chambres d'air allongées (6, 7 ; 57, 58) sont disposées symétriquement par rapport à la direction de déplacement.

3. Dispositif (4) selon la revendication 1 ou 2, **caractérisé en ce que** les ventilateurs (24, 61) placés opposés l'un à l'autre et associés à des chambres d'air allongées différentes (6, 7 ; 57, 58) sont montés dans un boîtier de palier collectif (22).

4. Dispositif (4) selon la revendication 3, **caractérisé en ce que** les ventilateurs (24) peuvent être entraînés par une courroie (31, 34, 35).

5. Dispositif (4) selon la revendication 1, 2, 3 ou 4, **caractérisé en ce que** les chambres d'air allongées (57, 58) et les ouvertures de sortie s'étendent pratiquement dans une direction horizontale.

6. Dispositif selon la revendication 5, **caractérisé en ce que** les chambres d'air allongées (57, 58) comportent chacune une paroi fabriquée au moins partiellement à partir d'un matériau souple et fixée sur un châssis de support.

7. Dispositif (4) selon la revendication 1, 2, 3 ou 4, **caractérisé en ce que** les chambres d'air allongées (6, 7) et les ouvertures de sortie (14, 15) s'étendent sensiblement dans une direction verticale.

8. Dispositif (4) selon la revendication 7, **caractérisé en ce qu'**au moins une des chambres d'air allongées (6, 7) est reliée à au moins deux ventilateurs (24) qui sont agencés en étant répartis de manière sensiblement régulière dans la direction de la longueur de la paroi (8, 9) contiguë à l'espace intermédiaire.

9. Dispositif (4) selon la revendication 8, **caractérisé en ce que** trois ventilateurs (24) sont agencés dans chacune des parois de chambre d'air (8, 9) et **en ce qu'**un moteur est relié par une courroie d'entraînement (31) au ventilateur médian (24) qui est relié à l'aide de courroies d'entraînement (34, 35) aux autres ventilateurs (24).

10. Dispositif (4) selon la revendication 9, **caractérisé en ce que** les parois (8, 9) des chambres d'air allongées dans lesquelles les ventilateurs sont agencés sont reliées aux ouvertures de sortie (14, 15) par l'intermédiaire de parois s'inclinant (10 à 13).
